# EUROPEAN PATENT SPECIFICATION

(11) **EP 2 326 456 B1**
(45) Date of publication and mention of the grant of the patent: **09.10.2019**
(21) Application number: 09808461.9
(22) Date of filing: 17.08.2009
(51) Int. Cl.: B23K 33/00, B23K 26/28, B60B 35/16, B23K 101/00

(54) **METHOD OF MANUFACTURING BY LASER WELDING A VEHICLE AXLE**
VERFAHREN ZUR HERSTELLUNG EINER FAHRZEUGACHSE DURCH LASERSCHWEISSEN
METHODE DE FABRICATION D'UN ESSIEU DE VEHICULE PAR SOUDAGE LASER

(30) Priority: 22.08.2008 SE 0801826
(43) Date of publication of application: 01.06.2011
(73) Proprietor: Scania CV AB, 151 87 Södertälje (SE)
(72) Inventor: PETTERSSON, Dan, S-151 46 Södertälje (SE)
(74) Representative: Scania CV AB
(86) International application number: PCT/SE2009/050938
(87) International publication number: WO 2010/021588

(56) References cited:
- EP-A1- 1 837 098
- EP-A1- 1 837 098
- WO-A1-02/102609
- WO-A1-02/102609
- JP-A- H0 366 485
- JP-A- 2001 198 678
- US-A1- 2007 199 763

## Description

### TECHNICAL FIELD

The invention relates to a method of manufacturing a vehicle axle according to the preamble of claim 1 (see, for example, WO02102609 A1).

### BACKGROUND

The production of rear axles of motor vehicles entails the welding of a shaft journal to each side of the intermediate element of the rear axle. A problem in such joining together by welding is that the precision of conventional welding technology is not satisfactory, which means that further processing of the welds is required after the respective shaft journals have been welded to the intermediate element of the rear axle. Laser use for said welding results in welds with better precision which need no further processing.

SE 522 485 describes a method for making vehicle steel axles which involves the use of laser welding to weld fully processed shaft journals to the respective shaft ends of an intermediate rigid axle element, where mutually facing axial end surfaces of the axle element and the respective shaft journals have substantially the same material thickness and abut against one another at fixed locations within predetermined measurement tolerances with regard to the concentricity and parallelism of the two journals. A partial section of the abutment surfaces is preheated within a predetermined first region which in like respects surrounds the partial section. The respective partial sections are welded during rotation of the shaft journals and the intermediate axle element so that the respective weld seams have an outer width which lies within the first region. The laser welding is executed with electric power exceeding 10 kW and laser beams with focusing of between 0 and 4 mm within the outer surface of the material, so that a welding velocity of more than 2 cm/s results in a weld seam fully able to penetrate the respective material of the shaft journals.

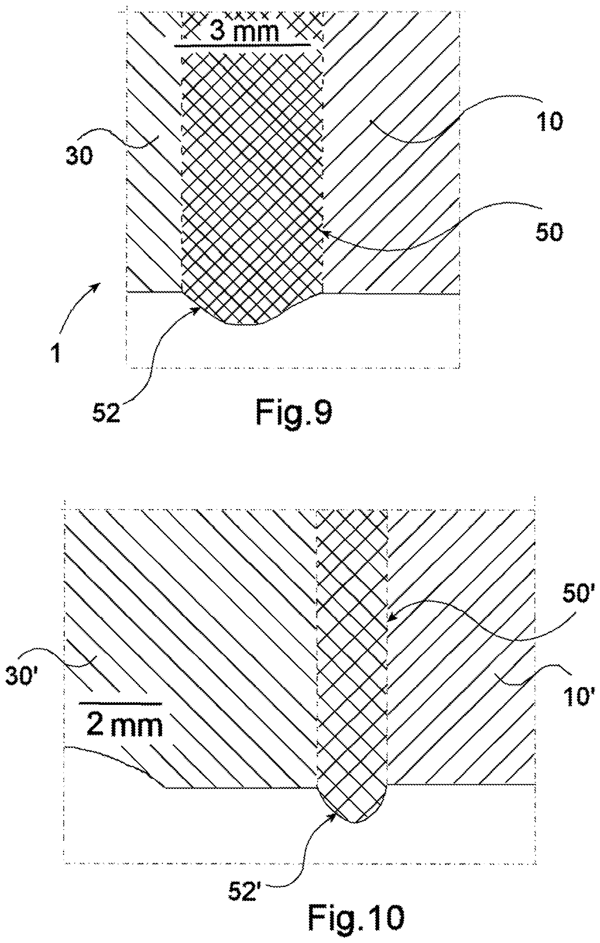

A problem with laser welding technology of the kind mentioned above is that there is a tendency to the occurrence of a droplike formation on the inside of the laser weld, as illustrated in Fig. 10 and described in more detail below. The result between the axle element and the protruding weld seam is a sharp edge at which high stress concentrations may occur, increasing the risk that the shaft journal might become detached.

### OBJECT OF THE INVENTION

An object of the present invention is to propose a method of manufacturing a vehicle axle with an intermediate axle element whereby shaft journals are attached by laser welding to the respective shaft ends of the intermediate axle element by seams which meet high strength requirements.

### SUMMARY OF THE INVENTION

A method of manufacturing a vehicle axle according to the present invention is defined in claim 1.

This is achieved with a vehicle axle comprising an intermediate element with a shaft journal at each of the two ends of the intermediate element, which intermediate element and respective shaft journals have mutual contact surfaces with substantially the same material thickness, each shaft journal and the respective end of the intermediate element have a shell surface running internally in the circumferential direction and a shell surface running externally, and each shaft journal is connected to the respective end of the intermediate element by a weld seam made by laser welding, with a chamfer situated at least at the transition between the internal surface and contact surface of the respective shaft journal and/or of the respective end of the intermediate element.

Chamfering the contact surface results in a smoother transition between the weld seam made by laser welding and the intermediate element and shaft journal respectively, since the chamfering reduces drop formation on the weld seam during the laser welding. The result is less notching and reduced stress concentrations and hence better strength of the vehicle axle. As the problem of drop formation on weld seams during laser welding is greatest on the internal surface, chamfering at said transition between internal surface and contact surface results in good reduction of said drop formation, i.e. a smoother transition between the internal surface of the weld seam and the internal surface of the intermediate element and shaft journal respectively, with less notching and reduced stress concentrations and hence better strength of the vehicle axle. Chamfering on the external side also has good effects.

### DESCRIPTION OF THE DRAWINGS

The present invention will be better understood with reference to the following detailed description read together with the attached drawings, in which the same reference notations denote similar items throughout the many views, and in which:
Fig. 1 depicts schematically a perspective view of a vehicle axle with an intermediate element and with shaft journals welded to the respective ends of the intermediate element;
Fig. 2 depicts schematically a perspective view of a detail of the vehicle axle according to Fig. 1 with a shaft journal welded to the intermediate element;
Fig. 3 depicts schematically a perspective view according to Fig. 1 with the shaft journal cut;
Fig. 4 depicts schematically a perspective view of a detail of the cut shaft journal in Fig. 3;
Fig. 5 depicts schematically an enlargement of a cross-section of part of the vehicle axle's intermediate element and shaft journal according to a first example arranged abutting against one another for connection;
Fig. 6 depicts schematically an enlargement of a cross-section through the weld seam and adjacent portions of the shaft journal and intermediate element according to Fig. 5, according to the first example;
Fig. 7 depicts schematically an enlargement of a cross-section of part of the vehicle axle's intermediate element and shaft journal according to a second example arranged abutting against one another for connection;
Fig. 8 depicts schematically an enlargement of a cross-section through the weld seam and adjacent portions of the shaft journal and intermediate element according to Fig. 7, according to the second example;
Fig. 9 depicts an enlargement of a cross-section through the weld seam and adjacent portions of the shaft journal and intermediate element after a laser welding process according to the present invention;
Fig. 10 depicts a cross-section through the weld seam and adjacent portions of the shaft journal and intermediate element after a laser welding process according to the state of the art; and
Fig. 11 depicts schematically a motor vehicle with a vehicle axle.

### DESCRIPTION OF EMBODIMENTS

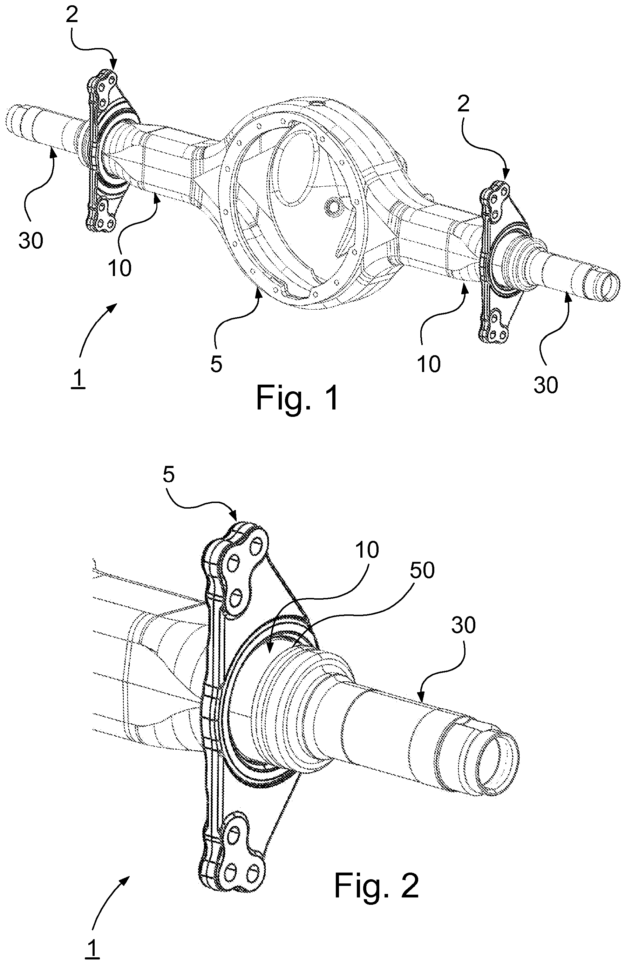

Fig. 1 depicts schematically a perspective view of a vehicle axle 1.

The vehicle axle 1 comprises an intermediate axle element 10 or intermediate element 10 and shaft journals 30 connectable to the respective ends of the intermediate element 10.

What is here exemplified is said intermediate element 10 of a rear axle beam 10 commonly present on heavy vehicles such as trucks. The shaft journals 30 have here a circular cross-section.

A brake bracket 2 is arranged on the rear axle beam 10 to support brake equipment (not depicted) which is fastened to the vehicle axle 1.

The axle beam 10 is made in a conventional manner of material suitable for the purpose for withstanding loads and suitable for being joined to the shaft journals 30 by laser welding. The axle beam 10 is preferably made of heavy steel plate with a material thickness according to a variant of between 7 and 15 mm. The axle beam 10 takes the form of a hollow unit adapted to comprising bearing supports and contact surfaces in order to be able to accommodate here undepicted drive shafts and, in a central space 5, driving power transmission gears, a so-called central gear.

The shaft journals 30 are made in a conventional manner of steel material suitable for the purpose for withstanding loads and suitable for being joined to the axle beam 10 by laser welding.

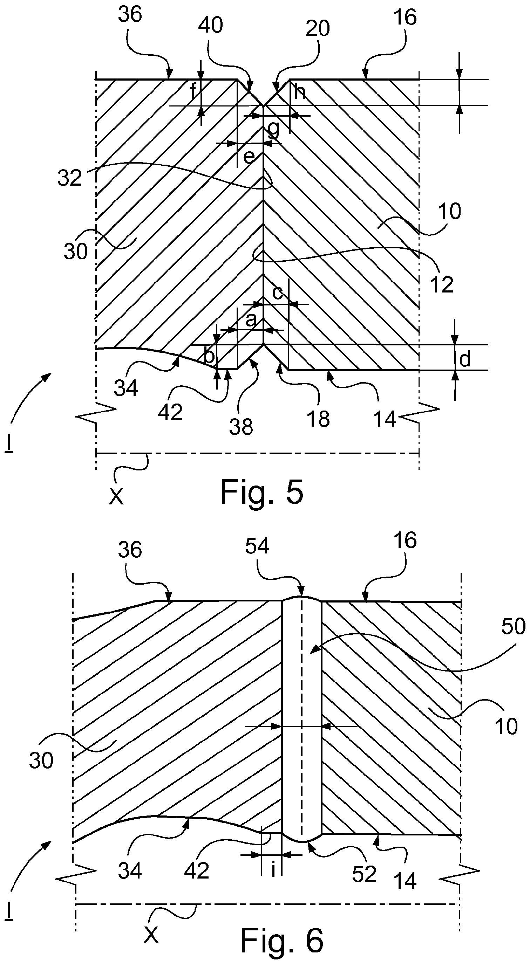

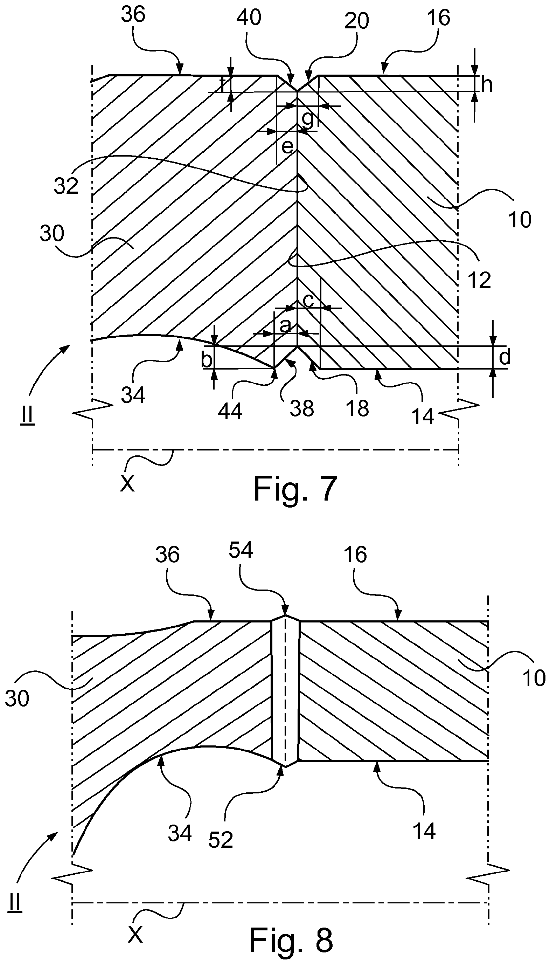

Fig. 2 depicts schematically a perspective view of a detail of the vehicle axle 1 according to Fig. 1, with a portion of the intermediate element 10, i.e. the axle beam 10, and a shaft journal 30 connected to the portion of the end of the intermediate element 10. The shaft journal 30 is connected to the axle beam by a weld seam 50 which is depicted in more detail in Figs. 6 and 8.

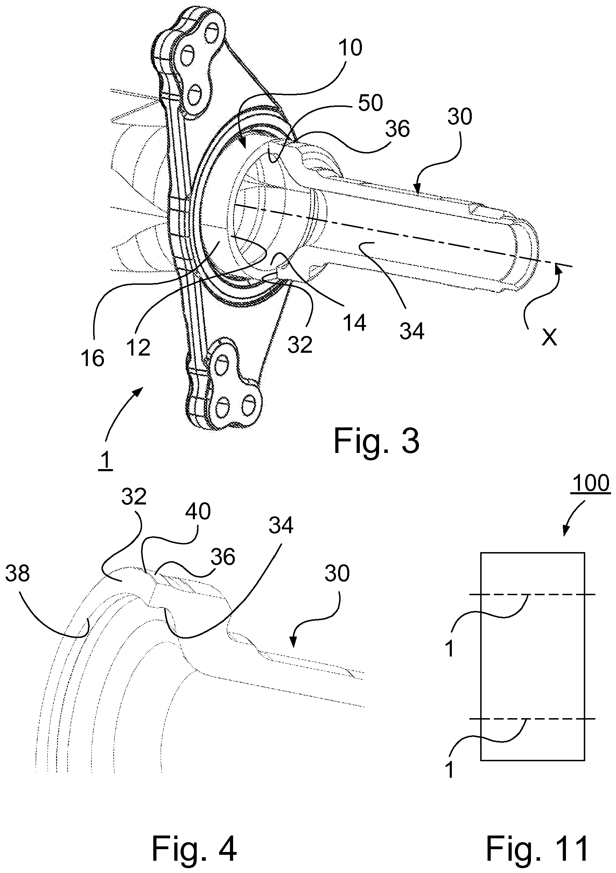

Fig. 3 depicts schematically a perspective view of a detail of the vehicle axle 1 according to Fig. 1, with a portion of the intermediate element 10 and a shaft journal 30 connected to the portion of the end of the intermediate element 10, with the shaft journal cut.

The intermediate element 10 has at each of its ends an end surface 12, only one of which is here depicted. The end surface 12 according to an embodiment is annular and according to a preferred variant it is circular and surrounds an axial centreline X which is substantially perpendicular to the end surface. The intermediate element thus has an internal surface and an external surface.

Each shaft journal 30 of the vehicle axle 1 has a corresponding end surface 32 adapted to abutting against an end surface 12 of the intermediate element 10.

The shaft journal's end surface 32 is therefore annular and, preferably, it is circular and surrounds an axial centreline X which is substantially perpendicular to the end surface, so that the respective end surfaces 12, 32 fit against one another. Each shaft journal 30 thus has an internal surface 34 and an external surface 36. The respective end surface 12 of the intermediate element 10 and the end surface 32 of the respective shaft journal 30 thus constitute contact surfaces 12, 32. The respective end surface/contact surface 12 of the intermediate element and the end surface/contact surface 32 of the respective shaft journal are processed to a predetermined surface fineness in a plane perpendicular to the centreline X.

Fig. 4 depicts schematically a perspective view of a detail of the cut shaft journal 30 in Fig. 4, with its end surface 32.

According to the invention, the transition from the internal surface 34 of the shaft journal 30 to the latter's end surface 32 is provided with a material thickness reduction 38 which is a chamfer 38. The material thickness reduction 38 is greatest at the end surface 32 and decreases progressively for a distance a along the internal surface 34 of the shaft journal 30 from said end surface 32. According to this aspect, the inside diameter of the shaft journal 30 decreases from the end surface for a distance a away from the end surface to where the chamfer-like reduction in material thickness changes to the internal surface 34. The chamfer-like reduction in material thickness 38 or the chamfer 38 is more clearly illustrated in Figs. 5 and 7.

According to the present invention, the transition from the external surface 36 of the shaft journal 30 to the latter's end surface 30 is provided with a material thickness reduction 40 which is a chamfer 40. The material thickness reduction 40 is greatest at the end surface and decreases progressively for a distance along the external surface 36 of the shaft journal 30 from said end surface 32. According to this aspect, the outside diameter of the shaft journal 30 increases from the end surface 32 for a distance away from the end surface 30 to where the chamfer-like reduction in material thickness changes to the external surface 36. The chamfer-like reduction in material thickness 40 is more clearly illustrated in Figs. 5 and 7.

With reference to Fig. 3, the transition according to the invention from the internal surface 14 of the intermediate element 10 to the latter's end surface 12 is provided with a material thickness reduction which is a chamfer (see Figs. 5 and 7).

According to an aspect, the transition from the external surface of the intermediate element 10 to the latter's end surface 12 is provided with a material thickness reduction which is preferably of chamfer-like configuration (see Figs. 5 and 7).

The internal surface 34 of the end portion of the shaft journal 30 which is to be fastened by welding to an end portion of the intermediate axle element 10, i.e. the intermediate element 10, is provided with a material thickness reduction beginning at a distance from the end surface 32, close to the chamfer-like reduction in material thickness and proceeding away from the end surface 32. The shaft journal thus has an internal portion with reduced material thickness beginning at a distance from the chamfer. The material thickness reduction takes the form in a conventional manner of a gently arcuate transition from the larger to the smaller material thickness. When the vehicle axle is on load, the reduction in material thickness guides the force flow through the shaft journals so that any crack notches at the internal surface of the weld seam need not signify any reduction in the strength of the vehicle axle.

According to an aspect, the material thickness reduction is situated at a distance from the location where the chamfer-like reduction in material thickness ceases (see Fig. 5). According to another aspect, the material thickness reduction takes the form of a direct transition from the location where the chamfer-like reduction in material thickness ceases (see Fig. 7).

Fig. 5 depicts schematically an enlargement of a cross-section of part of the vehicle axle's intermediate element 10 and part of an end portion of one of the vehicle axle's shaft journals 30 according to a first example I, arranged with their respective end surfaces/contact surfaces 12, 32, abutting against one another for connection by laser welding.

The end surface 32 of the shaft journal 30 is annular, preferably circular, surrounding an axial centreline X which is substantially perpendicular to the end surface, and the shaft journal 30 has an internal surface 34 and an external surface 36. The corresponding end surface 12 of the intermediate element 10 is likewise annular, preferably circular, surrounding an axial centreline X which is substantially perpendicular to the end surface, and the intermediate element 10 has an internal surface 14 and an external surface 16.

The transition from the internal surface 34 of the shaft journal 30 to the latter's annular end surface 32 is provided with a material thickness reduction 38 with a a circumferential chamfer 38. The material thickness reduction 38 is greatest at the end surface 32 and decreases progressively for a distance a along vehicle axle's internal surface 34 from said end surface 32.

According to this aspect, the inside diameter of the shaft journal 30 decreases from the end surface 32 for the distance a away from the end surface 32 to where the chamfer-like reduction in material thickness 38 changes to the internal surface 34 of the shaft journal 30. The chamfer 38 has a depth b extending radially outwards from the internal surface 34. The depth is preferably 5-15% of the thickness of the material, preferably 10-12% of the thickness of the material of the shaft journal.

Correspondingly, the transition from the internal surface 14 of the intermediate element 10 to the latter's annular end surface 12 is provided with a material thickness reduction 18 with a circumferential chamfer 18. The material thickness reduction 18 is greatest at the end surface 12 and decreases progressively for a distance c along the internal surface 14 of the intermediate element 10 from said end surface 12. According to this aspect, the inside diameter of the intermediate element 10 decreases from the end surface 12 for a distance away from the end surface 12 to where the chamfer-like reduction in material thickness 18 changes to the internal surface 14 of the intermediate element 10. The chamfer 18 has a depth d extending radially outwards from the internal surface 14. The depth is preferably 5-15% of the thickness of the material, preferably 10-12% of the thickness of the material of the end portion of the intermediate element 10.

The chamfer 38 at the transition between the internal surface 34 of the shaft journal 30 and the latter's end surface 32 and the chamfer 18 from the internal surface 14 of the intermediate element 10 to the latter's end surface 12 have substantially the same slope and substantially the same radial depth, and hence the respective chamfers 18, 38 have substantially the same surface size. Mutually facing contact surfaces 32, 12 of a shaft journal 30 and an intermediate element 10 respectively form a groove running internally in the circumferential direction. The respective chamfers 18, 38 have preferably a slope of 45 degrees relative to their internal surfaces 14, 34 and contact surfaces 12, 32. Abutting the end surface of the shaft journal 30 against the end surface 12 of the intermediate element 10 according to Fig. 5 results in the formation of a substantially V-shaped circumferential recess, or substantially V-shaped circumferential groove, which widens radially inwards.

The transition from the external surface 36 of the shaft journal 30 to the latter's annular end surface 32 is provided with a material thickness reduction 40 with a chamfer-like configuration constituting a circumferential chamfer 40. The material thickness reduction 40 is greatest at the end surface and decreases progressively for a distance e along the external surface 36 of the shaft journal 30 from said end surface 32. According to this variant, the outside diameter of the shaft journal 30 increases from the end surface 32 for a distance away from the end surface 32 to where the chamfer-like reduction in material thickness 40, i.e. the chamfer 40, changes to the external surface 36 of the shaft journal 30. The chamfer 40 has a depth f extending radially inwards from the external surface 36. The depth is preferably 5-15% of the thickness of the material, preferably 10-12% of the thickness of the material of the shaft journal.

Correspondingly, the transition from the external surface 16 of the intermediate element 10 to the latter's annular end surface 12 is provided with a material thickness reduction 20 with a chamfer-like configuration constituting a circumferential chamfer 20. The material thickness reduction 20 is greatest at the end surface 12 and decreases progressively for a distance g along the external surface 16 of the intermediate element 10 from said end surface 12. According to this variant, the outside diameter of the intermediate element 10 increases from the end surface 12 for a distance g away from the end surface 12 to where the chamfer-like reduction in material thickness 20 changes to the external surface 16 of the intermediate element 10. The chamfer 20 has a depth h extending radially inwards from the external surface 16. The depth is preferably 5-15% of the thickness of the material, preferably 10-12% of the thickness of the material of the intermediate element.

The chamfer 40 at the transition between the external surface 36 of the shaft journal 30 and the latter's end surface 32 and the chamfer 20 from the external surface 16 of the intermediate element 10 to the latter's end surface 12 have substantially the same slope and substantially the same radial depth, and hence the respective chamfers 20, 40 have substantially the same surface size. Mutually facing contact surfaces 32, 12 of a shaft journal 30 and intermediate element 10 respectively form a groove running externally in the circumferential direction. The respective chamfers 20, 40 have preferably a slope of 45 degrees relative to their internal surfaces 16, 36 and contact surfaces 12, 32. Abutting the end surface of the shaft journal 30 against the end surface 12 of the intermediate element 10 according to Fig. 5 results in the formation of a substantially V-shaped circumferential recess, or substantially V-shaped circumferential groove, which widens radially outwards.

The internal surface 34 on the end portion of the shaft journal 30 which is to be fastened by welding to an end portion of the intermediate axle element 10, i.e. the intermediate element 10, is provided with a material thickness reduction beginning at a distance *i* from where the chamfer-like reduction in material thickness 38 changes to the internal surface 34 away from the end surface 32. The shaft journal 30 thus has an internal portion with reduced material thickness beginning at a distance *i* from where the chamfer 38 changes to the internal surface 34 of the shaft journal 30. The internal surface 34 with the axial widening *i* from the transition from the chamfer 38 to the transition to the arcuate material thickness reduction constitutes an internal circumferential plateau 42. The material thickness reduction takes the form of a gently arcuate transition from the larger to the smaller material thickness, or of a substantially semicircular recess on the internal surface 34 of the material of the shaft journal.

Fig. 6 depicts schematically an enlargement of a cross-section through a weld seam 50 made by laser welding for connecting the contact surfaces 12, 32 of the intermediate element 10 and shaft journal 30 respectively according to the first example I in Fig. 5.

The weld seam 50 is made in a conventional manner by laser welding, e.g. according to the process described in SE 522485 C2.

The weld seam 50 has an internal surface 52 constituting a transition between the internal surface 34 of the shaft journal 30 and the internal surface 14 of the intermediate element 10, and an external surface 54 constituting a transition between the external surface 36 of the shaft journal 30 and the external surface 16 of the intermediate element 10.

The internal V-shaped recess 18, 38 formed by abutting the end surface 32 of the shaft journal 30 against the end surface 12 of the intermediate element 10 according to Fig. 5 results in a smoother transition between the internal surface 52 of the weld seam 50 made by laser welding and the internal surfaces 14, 34 of the intermediate element 10 and shaft journal 30 respectively. This is because the droplike shape resulting from the state of the art (see Fig. 10) is reduced by the V-shaped recess 18, 38 according to Fig. 5. The result is less notching and reduced stress concentrations and hence better strength of the vehicle axle. A further result is a smoother transition between the external surface 54 of the weld seam 50 and the external surfaces 16, 36 of the intermediate element 10 and shaft journal 30 respectively, with consequently further reduction in notching and in stress concentrations. The vehicle axle 1 and the weld seams 50 situated therein will thus cope with loads in arduous operating situations such as heavy trucks, e.g. up to about 15 tonnes.

When the vehicle axle 1 is on load, the arcuate reduction in material thickness beginning at a distance from where the chamfer 38 changes to the internal surface 34 of the shaft journal 30 guides the force flow through the shaft journals 30 so that any crack notches at the internal surface of the weld seam need not signify any reduction in the strength of the vehicle axle.

Fig. 7 depicts schematically an enlargement of a cross-section of part of the vehicle axle's intermediate element 10 and part of an end portion of one of the vehicle axle's shaft journals 30 according to a second example II, arranged with their respective end surfaces/contact surfaces 12, 32, abutting against one another for connection by laser welding.

The example according to Fig. 7 only differs from that according to Figs. 5 and 6 as regards the transition from the chamfer 38 to the internal surface 34 of the shaft journal 30.

The internal surface 34 on the end portion of the shaft journal 30 which is to be fastened by welding to an end portion of the intermediate axle element 10, i.e. the intermediate element 10, is provided with a material thickness reduction in the form of a direct transition 44 from where the chamfer-like reduction in material thickness 38, i.e. the chamfer 38, changes to the internal surface 34 of the arcuate material thickness reduction away from the end surface 32. The direct transition 44 between chamfer 38 and the arcuate material thickness reduction 34 constitutes a circumferential cam 44 or ridge 44. The shaft journal 30 thus has an internal portion with reduced material thickness as a direct transition 44 from where the chamfer 38 changes to the internal surface 34 of the shaft journal 30. The material thickness reduction takes the form of a gently arcuate transition from the larger to the smaller material thickness, or of a substantially semicircular recess on the internal surface 34 of the material of the shaft journal 30. When the vehicle axle 1 is on load, the reduction in material thickness guides the force flow through the shaft journals 30 so that any crack notches at the internal surface 52 of the weld seam 50 need not signify any reduction in the strength of the vehicle axle 1.

Fig. 8 depicts schematically an enlargement of a cross-section through a weld seam 50 made by laser welding for connecting the contact surfaces 12, 32 of the intermediate element 10 and shaft journal 30 respectively according to the second example II in Fig. 7.

The weld seam is made in a conventional manner by laser welding, e.g. according to the process described in SE 522485 C2.

The weld seam 50 has an internal surface 52 constituting a transition between the internal surface 34 of the shaft journal 30 and the internal surface 14 of the intermediate element 10, and an external surface 54 constituting a transition between the external surface 36 of the shaft journal 30 and the external surface 16 of the intermediate element 10.

The internal V-shaped recess 18, 38 formed by abutting the end surface 32 of the shaft journal 30 against the end surface 12 of the intermediate element 10 according to Fig. 7 results in a smoother transition between the internal surface 52 of the weld seam 50 made by laser welding and the internal surfaces 14, 34 of the intermediate element 10 and shaft journal 30 respectively. This is because the droplike shape resulting from the state of the art (see Fig. 10) is reduced by the V-shaped recess 18, 38 according to Fig. 7. The result is less notching and reduced stress concentrations and hence better strength of the vehicle axle. A further result is a smoother transition between the external surface 54 of the weld seam 50 and the external surfaces 16, 36 of the intermediate element 10 and shaft journal 30 respectively, with consequently further reduction in notching and in stress concentrations. The vehicle axle 1 and the weld seams 50 situated therein will thus cope with loads in arduous operating situations such as heavy trucks, e.g. about 15 tonnes.

The fact that the internal surface 34 on the end portion of the shaft journal 30 which is to be fastened by welding to the end portion of the intermediate element 10 is provided with a material thickness reduction in the form of a direct transition 44 from where the chamfer-like reduction in material thickness changes to the internal surface 34 of the arcuate material thickness reduction away from the end surface 32 improves the transition between the internal surface 52 of the weld seam 50 made by laser welding and the internal surface 34 of the shaft journal 30 in such a way that the internal surface 52 of the weld seam 50 substantially constitutes an extension of the arcuate material thickness reduction, i.e. the transition 44 between the internal surface 52 of the weld seam 50 and the internal surface 34 of the shaft journal 30 becomes very smooth. This further reduces the on-load stresses on the weld seam 50.

Fig. 9 depicts an enlargement of a cross-section through the weld seam 50 made by a laser welding process which connects the intermediate element 10 and the shaft journal 30 and portions of the shaft journal 30 and intermediate element 10 which are adjacent to the weld seam 50 according to an example corresponding to that in Fig. 6, i.e. with the V-shaped recess formed by abutting the end surface of the shaft journal against the end surface of the intermediate element 10.

Fig. 10 depicts a cross-section through a weld seam 50' made by a laser welding process connecting an intermediate element 10' and a shaft journal 30' and portions of the shaft journal 30' and intermediate element 10' which are adjacent to the weld seam 50' according to the state of the art, i.e. with no V-shaped recess/chamfer at the transitions between the end surfaces and internal/external surfaces of the intermediate element and the shaft journal.

The result is that the transition between the internal surface 52 of the weld seam 50 and intermediate element and the internal surface 52 of the weld seam and shaft journal 30 with V-shaped recess according to the present invention according to Fig. 9 will be smoother than the transition between the internal surface 52' of the weld seam 50' and intermediate element 10' and the internal surface 52' of the weld seam 50' and axle element 10' with no V-shaped recess according to the state of the art according to Fig. 10.

Fig. 11 depicts schematically a motor vehicle 100 with a vehicle axle 1.

The invention is thus not to be regarded as limited to the embodiments indicated above but may be varied within its scope indicated by the attached claims.

## Claims

1. A method of manufacturing a vehicle axle (1) comprising an intermediate element (10) with a shaft journal (30) at each of the two ends of the intermediate element (10), wherein the intermediate element (10) and the respective shaft journals (30) have mutual contact surfaces (12, 32) with substantially the same material thickness, each shaft journal (30) and respective end of the intermediate element (10) having a shell surface (14, 34) running in the circumferential direction internally and a shell surface (16, 36) running externally,
**characterised in that**
a chamfer (18, 38) is arranged at least on the transition between the internal surfaces (34, 14) and contact surfaces (32, 12) of each shaft journal (30) and of the respective end of the intermediate element (10), and the method being further **characterised by** the following step :
connecting, by means of laser welding, each shaft journal (30) to the respective end of the intermediate element (10) with a weld seam (50).

## Patentansprüche

1. Verfahren zur Herstellung einer Fahrzeugachse (1), die ein Zwischenglied (10) mit einem Achszapfen (30) an jedem der zwei Enden des Zwischenglieds (10) aufweist, wobei das Zwischenglied (10) und die zugehörigen Achszapfen (30) gegenseitige Kontaktflächen (12, 32) mit im Wesentlichen denselben Materialdicken haben, wobei jeder Achszapfen (30) und das zugehörige Ende des Zwischenglieds (10) eine Schalenfläche (14, 34), die in der Umfangsrichtung innen verläuft, und eine außen verlaufende Schalenfläche (16, 36) aufweisen,
**dadurch gekennzeichnet, dass**
eine Abfasung (18, 38) zumindest am Übergang zwischen den Innenflächen (34, 14) und den Kontaktflächen (32, 12) jedes Achszapfens (30) und des entsprechenden Endes des Zwischenglieds (10) angeordnet ist, wobei das Verfahren ferner **gekennzeichnet ist durch** den folgenden Schritt:
Verbinden jedes Achszapfens (30) mit dem entsprechenden Ende des Zwischenglieds (10) mit einer Schweißnaht (50) durch Laserschweißen.

## Revendications

1. Procédé de fabrication d'un essieu de véhicule (1) comprenant un élément intermédiaire (10) avec un tourillon d'arbre (30) à chacune des deux extrémités de l'élément intermédiaire (10), dans lequel l'élément intermédiaire (10) et les tourillons d'arbre respectifs (30) ont des surfaces de contact mutuel (12, 32) avec sensiblement la même épaisseur de matériau, chaque tourillon d'arbre (30) et l'extrémité respective de l'élément intermédiaire (10) ayant une surface de coque (14, 34) s'étendant dans la direction circonférentielle intérieurement et une surface de coque (16, 36) s'étendant extérieurement, **caractérisé en ce qu'**un chanfrein (18, 38) est disposé au moins sur la transition entre les surfaces intérieures (34, 14) et les surfaces de contact (32, 12) de chaque tourillon (30) et de l'extrémité respective de l'élément intermédiaire (10), et le procédé étant **caractérisé par** l'étape suivante :
la liaison, par soudage au laser, de chaque tourillon d'arbre (30) à l'extrémité respective de l'élément intermédiaire (10) à l'aide d'un cordon de soudure (50).
